# EUROPÄISCHE PATENTSCHRIFT

(11) **EP 0 696 139 B1**
(45) Veröffentlichungstag und Bekanntmachung des Hinweises auf die Patenterteilung: **07.05.2003**
(21) Anmeldenummer: 95111560.9
(22) Anmeldetag: 22.07.1995
(51) Int. Cl.: H04N 5/455, H04N 5/46, H03D 3/24, H04B 1/26, H04B 1/16

(54) **Verfahren und Schaltung zur Verarbeitung von digitalen und analogen Eingangssignalen**
Method and device for the processing of digital and analog input signals
Méthode et dispositif pour le traitement de signaux d'entrée numériques et analogiques

(30) Priorität: 03.08.1994 DE 4427396; 04.10.1994 DE 4435240
(43) Veröffentlichungstag der Anmeldung: 07.02.1996
(73) Patentinhaber: DEUTSCHE THOMSON-BRANDT GMBH, 78048 Villingen-Schwenningen (DE)
(72) Erfinder: Armbruster, Veit, D-78112 St. Georgen (DE); Siegel, Gerd, D-78086 Brigachtal (DE); Peusens, Herbert, D-78086 Brigachtal (DE)

(56) Entgegenhaltungen:
- EP-A- 0 276 144
- EP-A- 0 573 247
- EP-A- 0 574 273
- EP-A- 0 574 901
- WO-A-94/29949
- DE-A- 4 302 301
- IEEE TRANSACTIONS ON CONSUMER ELECTRONICS, Bd. 37, Nr. 4, 30.November 1991, NEW YORK US, Seiten 783-792, XP000162868 BRILKA J. ET AL: "AN ADVANCED 5V VIF-/SIF PLL FOR SIGNAL DETECTION IN TV SETS AND VTRS"
- IEEE TRANSACTIONS ON CONSUMER ELECTRONICS, Bd. 36, Nr. 3, 30.August 1990, NEW YORK US, Seiten 407-413, XP000162868 MCGINN M.: "AN ADVANCED I.F. AMPLIFIER & AFT SYSTEM SUITABLE FOR HDTV"

## Beschreibung

Die Erfindung geht aus von einem Verfahren zum Verarbeiten von digitalen und analogen Eingangssignalen gemäß dem Oberbegriff des Anspruchs 1, beziehungsweise von einer Schaltung nach dem Oberbegriff des Anspruchs 5.

Bei den derzeitigen Schaltungen für die PLL-Demodulation, auch ZF-Verstärker genannt, ist es nicht möglich, sowohl analoge als auch digitale Eingangssignale zu verarbeiten.

Für den Empfang heutiger Fernsehsignale wird zur Demodulation vorzugsweise ein ZF-Verstärker eingesetzt, welcher nach dem PLL-Prinzip arbeitet. Für den Empfang zukünftiger digitaler Fernsehsignale wird nach dem Trennen und Umsetzen im Tuner ein weiterer Umsetzer benötigt, um in einem geeigneten Frequenzbereich eine Analog/Digital-Umwandlung durchzuführen. Derzeit ist es notwendig, jeweils für digitale und analoge Signale getrennte Schaltungen zu verwenden.

Aus der WO94/29949, die Stand der Technik nach Artikel 54(3) und 54(4) ist, ist ein Fernsehtuner für terrestrischen Empfang und für Satellitenempfang bekannt. Bei terrestrischem Empfang sind hierbei die erste Mischstufe und die zweite Mischstufe für eine zweifache Frequenzumsetzung auf die Zwischenfrequenzen von 38,9 MHz und 33,4 MHz aktiv. Bei Satellitenempfang ist nur die erste Mischstufe als Frequenzumsetzer wirksam, und die zweite Mischstufe wird als Bestandteil des PLL-Demodulators ausgenutzt.

Der Erfindung liegt die Aufgabe zugrunde, auf einfache Weise ein Verfahren zu schaffen, bei dem digitale und analoge Eingangssignale in einer Schaltung verarbeitet werden können, beziehungsweise eine diesbezügliche Schaltung.

Diese Aufgabe wird durch die in den Ansprüchen 1 und 5 angegebenen Merkmale der Erfindung gelöst. Vorteilhafte Weiterbildungen der Erfindung sind in den Unteransprüchen angegeben.

Erfindungsgemäß werden durch schaltbare Mittel einem regelbaren Schwingungserzeuger jeweils die Bauelemente für analoge oder digitale Eingangssignale zugeschaltet. Die schaltbaren Mittel werden in Abhängigkeit von dem Eingangssignal automatisch und/oder manuell gesetzt.

Eine Schaltung für das Verfahren weist einen regelbaren Schwingungserzeuger auf, welcher durch schaltbare Mittel entweder mit einem Filter und einem vom Eingangssignal gesteuerten Komparator verbunden wird, oder mit einem vom Eingangssignal unabhängigen Phasenregelkreis. Bei einem digitalen Eingangssignal durchläuft dieses einen geregelten Verstärker und wird in einem Mischer mit einem regelbaren Schwingungserzeuger, welcher unabhängig vom Eingangssignal durch ein externes Signal angesteuert wird, in eine zweite ZF umgesetzt, die für die digitale Signalverarbeitung erforderlich ist. Dabei werden ein Komparator und das für die analoge Demodulation erforderliche Filter abgeschaltet.

Bei einem analogen Eingangssignal durchläuft dieses einen geregelten Verstärker, und wird in einem Komparator und Filter mit dem regelbaren Schwingungserzeuger verglichen. Gleichzeitig wird das analoge Eingangssignal und das Signal des regelbaren Schwingungserzeugers dem Mischer zugeführt. Am Ausgang des Mischers steht das aufbereitete analoge Ausgangssignal.

Das Filter ist als Loop-Filter, der Komparator als Phasenkomparator, der regelbare Schwingungserzeuger als VCO (voltage controlled oscillator) ausgebildet, und die Zwischenfrequenz wird als ZF bezeichnet.

Vorteilhaft bei dem Verfahren und der dazugehörigen Schaltungsanordnung ist, daß es auf diesem Wege ermöglicht wird, sowohl analoge als auch digitale Signale zu empfangen. Das Verwenden von derzeit zwei Schaltungsanordnungen jeweils für analog oder digital ist nicht mehr notwendig.

Die Erfindung wird im folgenden anhand der Zeichnungen erläutert. Darin zeigen
- Fig. 1: einen Aufbau des erfindungsgemäßen Verfahrens und
- Fig. 2: einen Aufbau der erfindungsgemäßen Schaltung.

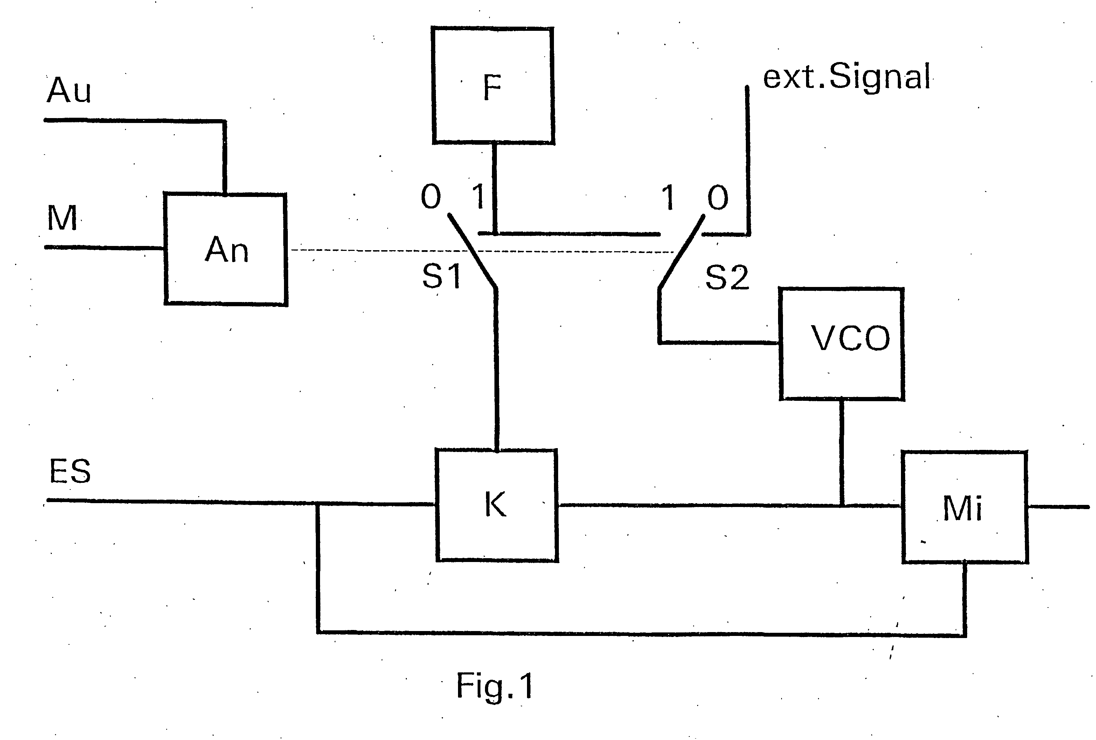

Fig. 1 zeigt das Eingangssignal ES, welches einem Komparator K und einem Mischer Mi zugeführt wird. Der Schalter S1 schaltet das Ausgangssignal des Komparators in Abhängigkeit von einer Ansteuerung An auf einen Filter F. Der Schalter S2 schaltet den VCO entweder an das Filter F oder an ein externes Signal. Die Ansteuerung An geschieht entweder manuell M oder automatisch Au durch Erkennung, ob ein digitales oder analoges Eingangssignal ES vorhanden ist. Der regelbare Schwingungserzeuger VCO ist verbunden mit dem Mischer Mi. Das Eingangssignal ES wird dem Mischer Mi zugeführt. Am Ausgang AM des Mischers Mi steht das jeweilige aufbereitete Signal für digitale und analoge Eingangssignale ES an. Der Schalter S2 wird wie der Schalter S1 von der Ansteuerung An in Abhängigkeit von dem Eingangssignal ES angesteuert.

Liegt ein digitales Eingangssignal ES an, erkennt die Ansteuerung An dieses. Die Ansteuerung An setzt nun die Schalter S1, S2 in Stellung 0. Die Eingabe, daß ein digitales Eingangssignal ES anliegt, kann auch manuell vorgenommen werden. In dieser Stellung der Schalter S1 und S2 liegt ein externes Signal an dem regelbaren Schwingungserzeuger VCO. Der Mischer Mi erhält nun das so aufbereitete VCO-Signal und das Eingangssignal. Am Ausgang AM des Mischers Mi steht nun eine zweite ZF für die digitale Weiterverarbeitung an. Sind die Schalter S1 und S2 in Schalterstellung I, so wird das Eingangssignal durch das Filter F und den Komparator K mit dem regelbaren Schwingungserzeuger VCO verglichen. Der Mischer Mi erhält nun das so aufbereitete VCO-Signal und das Eingangssignal. Am Ausgang AM des Mischers Mi steht nun ein aufbereitetes analoges Signal für die analoge Weiterverarbeitung an.

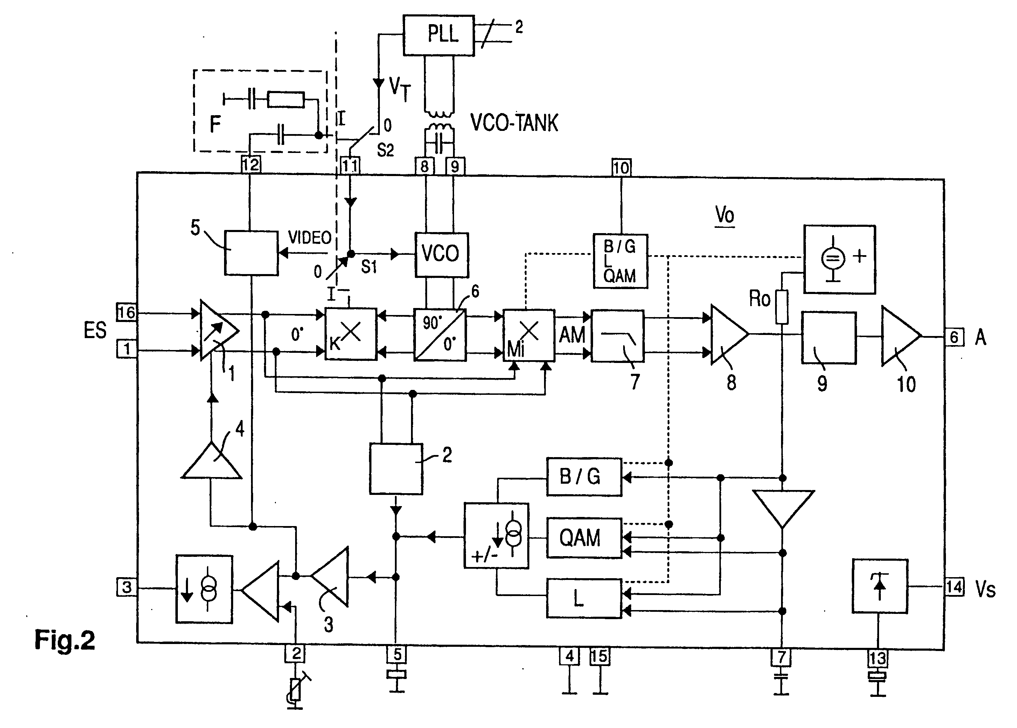

Fig. 2 zeigt eine ZF-Verstärkerschaltung V. Das Eingangssignal ES durchläuft einen geregelten Verstärker 1 und wird in einem Phasenkomparator K zur Trägerrückgewinnung mit dem regelbaren Schwingungserzeuger VCO verglichen. Der Ausgang des Komparators K wird über den Schalter S1 mit dem Loopfilter verbunden, das Loopfilter wird über dem Schalter S2 mit dem VCO verbunden. Damit wird der regelbare Schwingungserzeuger VCO phasensynchron zum Eingangssignal nachgeführt und steht in Verbindung mit dem Mischer Mi. Nach dem Verstärker 1 wird das Eingangssignal ES dem Mischer Mi zugeführt. Das Filter F ist als Loopfilter mit einem Kondensator, an dessen Ende zur Schalterstellung I des Schalters S2 ein Widerstand und ein Kondensator in Reihe liegen, ausgelegt. Der Schalter S1, der regelbare Schwingungserzeuger VCO und der Schalter S2 sind miteinander verbunden. Der Schalter S2 schaltet in Stellung 0 das externe Signal auf den regelbaren Schwingungserzeuger VCO. Das externe Signal wird durch einen quarzgenauen Phasenregelkreis erzeugt.

Liegt ein analoges Eingangssignal an dem Verstärker 1 an, befinden sich die Schalter S1 und S2 in der Stellung I. Das Signal vom Loopfilter F gelangt über den Schalter S2 auf den regelbaren Schwingungserzeuger VCO, wie auch das Signal des Phasenkomparators K über den Schalter S1 auf den regelbaren Schwingungserzeuger VCO gelangt. Vom regelbaren Schwingungserzeuger VCO gelangt das so gewonnene Signal über einen Phasenumsetzer 6 auf den Mischer Mi. Am Ausgang AM des Mischers Mi steht ein analoges Signal an, das über die Elemente 7, 8, 9 und 10 zum Ausgang der Schaltung A geführt wird. An diesem Punkt liegt nun das demodulierte Videosignal an.

Liegt ein digitales Eingangssignal an der Verstärkerstufe 1 an; so befinden sich die Schalter S1 und S2 in Schalterstellung 0. Der regelbare Schwingungserzeuger VCO bekommt nun von extern ein Signal zugeführt, das von einem quarzgenauen Regelkreis abgeleitet wird. Der regelbare Schwingungserzeuger VCO schwingt nun unabhängig vom Eingangssignal. Vom regelbaren Schwingungserzeuger VCO gelangt das so gewonnene Signal über einen Phasenumsetzer 6 auf den Mischer Mi. Am Ausgang AM des Mischers Mi steht eine zweite ZF an, welche über die Elemente 7, 8, 9 und 10 zum Ausgang der Schaltung A geführt wird.

Durch das Einfügen der Schalter S1 und S2 wird die eigentliche Anordnung zweckentfremdet, indem die Schaltungsanordnung aufgetrennt wird. So ist es möglich, den regelbaren Schwingungserzeuger VCO vorteilhaft doppelt einzusetzen, einmal zur Gewinnung der analogen Signale, zum anderen zur Gewinnung der zweiten ZF.

## Patentansprüche

1. Verfahren zum Verarbeiten von modulierten digitalen und analogen Fernseh-Eingangssignalen (ES), **dadurch gekennzeichnet, daß** die Eingangssignale (ES) einem Mischer (Mi) zugeführt werden, der mit einem regelbaren Schwingungserzeuger (VCO) verbunden ist, und daß durch schaltbare Mittel (S1, S2) dem regelbaren Schwingungserzeuger (VCO) jeweils die Bauelemente zur Verarbeitung für die analogen (F, K) oder für die digitalen (PLL) Eingangssignale (ES) zugeordnet werden.

2. Verfahren nach Anspruch 1, **dadurch gekennzeichnet, daß** der regelbare Schwingungserzeuger (VCO) zur Verarbeitung der analogen Eingangssignale durch die schaltbaren Mittel (S1, S2) mit einem Komparator (K) und einem Filter (F) zur Trägerrückgewinnung verbunden wird, und zur Verarbeitung der digitalen Eingangssignale mit einem extern abgeleiteten Signal verbunden wird.

3. Verfahren nach Anspruch 2, **dadurch gekennzeichnet, daß** das externe Signal mit einem quarzgenauen Phasenregelkreis erzeugt wird.

4. Verfahren nach Anspruch 1, 2 oder 3, **dadurch gekennzeichnet, daß** die Eingangssignale (ES) nach der Umsetzung in einem Tuner dem Mischer (Mi) zugeführt werden.

5. Schaltung zur Verarbeitung von modulierten digitalen und analogen Fernsehsignalen (ES), die durch einen Tuner auf eine erste Zwischenfrequenz (ZF) umgesetzt sind, **dadurch gekennzeichnet, daß** die Schaltung einen regelbaren Schwingungserzeuger (VCO) und schaltbare Mittel (S1, S2) aufweist,
wobei die schaltbaren Mittel (S1, S2) bei einem analogen Eingangssignal dem regelbaren Schwingungserzeuger (VCO) Bauelemente (F, K) zur Verarbeitung des analogen Eingangssignals zur analogen Demodulation zuschalten, und die Schaltung ein analoges Signal am Ausgang (AM, A) liefert, und
bei einem digitalen Eingangssignal die schaltbaren Mittel (S1, S2) dem regelbaren Schwingungserzeuger (VCO) Bauelemente zur Verarbeitung des digitalen Eingangssignals zuschalten zur Gewinnung einer zweiten Zwischenfrequenz, die am Ausgang (AM, A) der Schaltung ansteht.

6. Schaltung nach Anspruch 5, **dadurch gekennzeichnet, daß** die Bauelemente (F, K) zur Verarbeitung des analogen Eingangssignals ein Filter (F) und einen Komparator (K) aufweisen.

7. Schaltung nach Anspruch 6, **dadurch gekennzeichnet, daß** das Filter (F) als Loopfilter, der Komparator (K) als Phasenkomparator und der regelbare Schwingungserzeuger als spannungsgesteverter Oszillator VCO (voltage controlled oscillator) ausgebildet ist.

8. Schaltung nach einem der vorhergehenden Ansprüche 5, 6 oder 7, **dadurch gekennzeichnet, daß** bei einem analogen Eingangssignal (ES) am Ausgang ein analoges Videosignal zwischen 0 und 5 MHz anliegt, und bei einem digitalen Eingangssignal (ES) eine zweite Zwischenfrequenz mit einem Frequenzbereich zwischen 2 und 10 MHz anliegt.

9. Schaltung nach einem der vorhergehenden Ansprüche 5 bis 8, **dadurch gekennzeichnet, daß** die Schaltung als Zwischen Frequenz (ZF) Verstärkerschaltung in einem IC integriert ist, wobei das externe Signal durch einen quarzgenauen Phasenregelkreis erzeugt wird.

## Claims

1. Method for processing modulated digital and analog television input signals (ES),
**characterized in that**
the input signals (ES) are fed to a mixer (Mi), which is connected to a controllable oscillation generator (VCO), and that the components for processing the analog (F, K) or the digital (PLL) input signals (ES) are allocated to the controllable oscillation generator (VCO) by switchable means (S1, S2) in the respective case.

2. Method according to claim 1, **characterized in that** the controllable oscillation generator (VCO) is connected to a comparator (K) and to a filter (F) for purpose of carrier generation for processing the analog input signals by the switchable means (S1, S2), and is connected to an externally derived signal for processing the digital input signals.

3. Method according to claim 2, **characterized in that** the external signal is generated by a crystal-accurate phase locked loop.

4. Method according to claim 1, 2 or 3, **characterized in that** the input signals (ES) are fed to the mixer (Mi) after the conversion in a tuner.

5. Circuit for processing modulated digital and analog television signals (ES) which are converted into a first intermediate frequency (IF) by a tuner, **characterized in that** the circuit includes a controllable oscillation generator (VCO) and switchable means (S1, S2),
wherein in case of an analog input signal the switchable means (S1, S2) connect components (F, K) for processing the analog input signal for an analog demodulation to the controllable oscillation generator (VCO), and the circuit provides an analog signal at the output (AM, A) and
in case of a digital input signal the switchable means (S1, S2) connect components for processing the digital input signal to the controllable oscillation generator (VCO) for obtaining a second intermediate frequency, which is present at the output (AM, A) of the circuit.

6. Circuit according to claim 5, **characterized in that** the components (F, K) for processing the analog input signal include a filter (F) and a comparator (K).

7. Circuit according to claim 6, **characterized in that** the filter (F) is designed as a loop filter, the comparator (K) as a phase comparator and the controllable oscillation generator as a voltage controlled oscillator (VCO).

8. Circuit according to one of the preceding claims 5, 6 or 7, **characterized in that** an analog video signal between 0 and 5 MHz is present at the output in case of an analog input signal (ES), and a second intermediate frequency having a frequency range between 2 and 10 MHz is present in the case of a digital input signal (ES).

9. Circuit according to anyone of the preceding claims 5 to 8, **characterized in that** the circuit is integrated in form of an intermediate frequency (IF)-amplification circuit within an IC, wherein the external signal is generated by a crystal-accurate phase locked loop.

## Revendications

1. Procédé pour le traitement de signaux d'entrée de télévision (ES) numériques et analogiques modulés, **caractérisé en ce que** les signaux d'entrée (ES) sont acheminés vers un mélangeur (Mi) relié à un générateur d'oscillations réglable (VCO), et **en ce que** les composants respectifs pour le traitement des signaux d'entrée (ES) analogiques (F, K) ou numériques (PLL) sont acheminés vers le générateur d'oscillations réglable (VCO) à travers des moyens de commutation (S1 et S2).

2. Procédé selon la revendication 1, **caractérisé en ce que**, pour le traitement des signaux d'entrée analogiques, le générateur d'oscillations réglable (VCO) est relié à travers les moyens de commutations (S1 et S2) à un comparateur K et à un filtre (F) pour la récupération de la porteuse, et que pour le traitement des signaux d'entrée numériques, il est relié à un signal dérivé de l'extérieur.

3. Procédé selon la revendication 2, **caractérisé en ce que** le signal externe est généré par un circuit de régulation de la phase avec la précision d'un quartz.

4. Procédé selon la revendication 1, 2 ou 3, **caractérisé en ce que** les signaux d'entrée (ES) sont acheminés vers un mélangeur (Mi) après la transposition dans un tuner.

5. Circuit pour le traitement de signaux d'entrée de télévision (ES) numériques et analogiques modulés qui sont transposés par un tuner en une première fréquence intermédiaire (ZF), **caractérisé en ce que** le circuit comprend un générateur d'oscillations réglable (VCO) et des moyens de commutation (S1 et S2),
les moyens de commutation (Si et S2) commutant, pour un signal d'entrée analogique, les composants (F, K) sur le générateur d'oscillations réglable (VCO) pour le traitement du signal d'entrée analogique pour la démodulation analogique, et le circuit délivrant un signal analogique à la sortie (AM, A), et
les moyens de commutation (S1 et S2) commutant, pour un signal d'entrée numérique, des composants sur le générateur d'oscillations réglable (VCO) pour le traitement du signal d'entrée numérique pour obtenir une deuxième fréquence intermédiaire présente sur la sortie (AM, A) du circuit.

6. Circuit selon la revendication 5, **caractérisé en ce que** les composants (F, K) comprennent un filtre (F) et un comparateur (K) pour le traitement du signal d'entrée analogique.

7. Circuit selon la revendication 6, **caractérisé en ce que** le filtre (F) est réalisé sous la forme d'un filtre loop, le comparateur (K) sous la forme d'un comparateur de phase et le générateur d'oscillations réglable sous la forme d'un oscillateur contrôlé par tension VCO (voltage controlled oscillator).

8. Circuit selon une des revendications précédentes 5, 6 ou 7, **caractérisé en ce que**, pour un signal d'entrée (ES) analogique, on a un signal vidéo entre 0 et 5 MHz à la sortie, et pour un signal d'entrée (ES) numérique, on a une deuxième fréquence intermédiaire avec une plage de fréquences entre 2 et 10 MHz.

9. Circuit selon une des revendications précédentes 5 à 8, **caractérisé en ce que** le circuit est intégré dans un circuit intégré sous la forme d'un circuit amplificateur de fréquence intermédiaire (ZF), le signal externe étant généré par un circuit de régulation de la phase avec la précision d'un quartz.
